(19)

Europäisches
Patentamt
European
Patent Office
Office européen
des brevets

(11) **EP 4 273 520 A1**

(12) **EUROPEAN PATENT APPLICATION**
published in accordance with Art. 153(4) EPC

(43) Date of publication:
**08.11.2023 Bulletin 2023/45**

(21) Application number: **21915818.5**

(22) Date of filing: **29.12.2021**

(51) International Patent Classification (IPC):
***G01H 1/14*** *(2006.01)*   ***G01M 99/00*** *(2011.01)*
***G06N 20/00*** *(2019.01)*

(52) Cooperative Patent Classification (CPC):
**G01H 1/14; G01M 99/00; G06N 20/00**

(86) International application number:
**PCT/KR2021/020137**

(87) International publication number:
**WO 2022/146020 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2020 KR 20200189558**

(71) Applicants:
• **Korea Hydro & Nuclear Power Co., Ltd**
  **Gyeongju-si, Gyeongsangbuk-do 38120 (KR)**
• **ATG Co., Ltd.**
  **Seongnam-si, Gyeonggi-do 13562 (KR)**

(72) Inventors:
• **LEE, Won Kyu**
  **Sejong 30146 (KR)**

• **YANG, Jae Heung**
  **Yongin-si, Gyeonggi-do 16809 (KR)**
• **LEE, Jong Myeong**
  **Pohang-si, Gyeongsangbuk-do 37609 (KR)**
• **JO, Sung Han**
  **Okcheon-gun Chungcheongbuk-do 29061 (KR)**
• **YE, Song Hae**
  **Daejeon 34075 (KR)**
• **MAENG, Hyo Young**
  **Daejeon 35209 (KR)**
• **KIM, Min Ho**
  **Sejong 30152 (KR)**

(74) Representative: **Habermann, Hruschka & Schnabel**
**Patentanwälte**
**Montgelasstraße 2**
**81679 München (DE)**

(54) **METHOD AND SYSTEM FOR COMPREHENSIVELY DIAGNOSING DEFECT IN ROTATING MACHINE**

(57)    A method for diagnosing a defect in a rotating machine, according to the present disclosure, may comprise the steps of: determining a defect level on the basis of data obtained by diagnosing the state of the rotating machine, the data, obtained by diagnosing the state of the rotating machine, including at least one from among a feature vector related to a vibration signal of the rotating machine, a frequency linked to the defect in the rotating machine and the total vibration value of the rotating machine; applying a weight to the defect level on the basis of information related to a defect in state history data of the rotating machine and/or whether an alarm related to operating information about the rotating machine has occurred; and determining the defect severity of the rotating machine on the basis of the defect level to which the weight is applied.

FIG. 1

EP 4 273 520 A1

# Description

## Technical Field

The present disclosure relates to a method and a system for detecting a defect in a rotating machine, and more particularly, a method and system for diagnosing a defect in a rotating machine by simultaneously linking various direct diagnosis techniques and indirect diagnosis techniques.

## Background Art

In general, a diagnosis system for diagnosing a state in a rotating machine can monitor vibrations of a facility and trends of operating variables. In addition, the diagnosis system can change a monitoring period depending on whether or not there is an abnormality in the rotating machine, and can predict the state of the facility by analyzing the trend of change.

Various direct diagnosis techniques and indirect diagnosis techniques can be used to diagnose the condition of a rotating machine. For example, the diagnosis system can monitor a facility by classifying a defect frequency band in detail. Alternatively, for example, the diagnosis system can automatically diagnose the facility on the basis of defect characteristics and/or facility information through verified diagnosis rules. Alternatively, for example, the diagnosis system may diagnose the facility by extracting features on the basis of a plurality of data and utilizing machine learning to implement a classification model through learning. Alternatively, for example, the diagnosis system can compare and diagnose mutual facilities by grouping the same type of facilities. Alternatively, for example, the diagnosis system can diagnose by utilizing driving information.

At this time, each diagnosis technique may output the result of the state of the rotating machine independently, and the result may be also be a qualitative evaluation.

## Disclosure

## Technical Problem

An object of the present disclosure is to provide a method and a system for diagnosing a defect in a rotating machine that automatically quantify a state of a facility by simultaneously linking and performing various diagnosis techniques on the basis of information acquired from a rotating machine.

## Technical Solution

According to an aspect of the present disclosure, there is provided a method of diagnosing a defect in a rotating machine, the method including: determining a defect level on the basis of data obtained by diagnosing a state of the rotating machine, the data, obtained by diagnosing the state of the rotating machine, including at least one from among a feature vector related to a vibration signal of the rotating machine, a frequency linked to the defect in the rotating machine, and a total vibration value of the rotating machine; applying a weight to the defect level on the basis of information related to a defect in state history data of the rotating machine and/or whether an alarm related to operation information about the rotating machine has occurred; and determining a defect severity of the rotating machine on the basis of the defect level to which the weight is applied.

The state history data of the rotating machine may include a maintenance history of the rotating machine and information related to facilities of the same type, and the defect in the state history data of the rotating machine may be a defect with the highest frequency in the facilities of the same type.

The alarm may occur on the basis of a monitoring item related to operation information of the rotating machine exceeding a preset reference value.

The operation information of the rotating machine includes at least one of a flow rate of a pump related to the rotating machine, front and rear end pressures related to the rotating machine, or a fluid temperature related to the rotating machine.

The weight may be added to the defect level on the basis of matching between the defect with the highest frequency in the facilities of the same type related to the rotating machine and a defect state of the rotating machine related to the defect level.

The weight may be added to the defect level on the basis of an occurrence of the alarm related to operation information of the rotating machine.

It may be determined whether the alarm related to the operation information of the rotating machine occurs on the basis of a discrepancy between the defect with the highest frequency in the facilities of the same type related to the rotating machine and the defect state of the rotating machine related to the defect level.

A first defect value for the rotating machine through machine learning may be diagnosed on the basis of the feature vector related to a vibration signal of the rotating machine. Moreover, it may be determined whether or not the rotating machine has a defect through the machine learning. The machine learning may be performed on the basis of the feature vectors related to the vibration signal of the rotating machine.

A second defect value may be diagnosed on the basis of the frequency linked to the defect of the rotating machine and the first defect value.

A third defect value may be diagnosed on the basis of the total vibration value of the rotating machine and the second defect value.

The defect level of the rotating machine may be diagnosed on the basis of at least one of the first defect value, the second defect value, and the third defect value.

The first defect value may be determined as 0 and the defect severity may be determined as 0 on the basis of the non-existence of the defect in the rotating machine.

On the basis of the existence of the defect in the rotating machine, the first defect value may be determined on the basis of all samples related to the rotating machine and defect samples related to the rotating machine

On the basis of the frequency linked to the defect of the rotating machine being within a preset range, the second defect value is determined as a preset first value.

On the basis of the frequency linked to the defect of the rotating machine being outside the preset range, the second defect value may be determined as the first defect value, and the defect level may be determined as the first defect value.

On the basis of the total vibration value of the rotating machine being smaller than a first threshold value, the third defect value may be determined as the second defect value and the defect level may be determined as the second defect value.

On the basis of the total vibration value of the rotating machine being greater than a first threshold value, the third defect value may be determined as a preset second value, and the defect level may be determined as the preset second value.

On the basis of the total vibration value of the rotating machine being greater than a second threshold value, the third defect value may be determined as a preset third value, and the defect level may be determined as the preset third value.

According to another aspect of the present disclosure, there is provided a system of diagnosing a defect in a rotating machine, the system including: determining a defect level on the basis of data obtained by diagnosing a state of the rotating machine, the data, obtained by diagnosing the state of the rotating machine, including at least one from among a feature vector related to a vibration signal of the rotating machine, a frequency linked to the defect in the rotating machine, and a total vibration value of the rotating machine; applying a weight to the defect level on the basis of information related to a defect in state history data of the rotating machine and/or whether an alarm related to operation information about the rotating machine has occurred; and determining a defect severity of the rotating machine on the basis of the defect level to which the weight is applied.

According to still another aspect of the present disclosure, there is provided an arithmetic processor of a system of diagnosing a defect in a rotating machine, the arithmetic processor including: determining a defect level on the basis of data obtained by diagnosing a state of the rotating machine, the data, obtained by diagnosing the state of the rotating machine, including at least one from among a feature vector related to a vibration signal of the rotating machine, a frequency linked to the defect in the rotating machine, and a total vibration value of the rotating machine; applying a weight to the defect level on the basis of information related to a defect in state history data of the rotating machine and/or whether an alarm related to operation information about the rotating machine has occurred; and determining a defect severity of the rotating machine on the basis of the defect level to which the weight is applied.

Advantageous Effects

According to the method and system for diagnosing a defect of a rotating machine according to the present disclosure, it is possible to quantitatively evaluate a minute state change of a facility, accurately confirm a progress of the defect in the facility by utilizing an evaluation result value (for example, defect severity), and more accurately determine a maintenance period and lifespan of the state of the facility.

The technical effects of the present disclosure as described above are not limited to the effects mentioned above, and other technical effects not mentioned will be clearly understood by those skilled in the art from the description below.

Description of Drawings

FIG. 1 is a configuration diagram illustrating a defect diagnosis system of a rotating machine according to one embodiment of the present disclosure.
FIG. 2 is a configuration diagram illustrating an arithmetic processor of a defect diagnosis system according to one embodiment of the present disclosure.
FIG. 3 is a flowchart illustrating a method for comprehensively diagnosing a defect in a rotating machine according to one embodiment of the present disclosure.
FIG. 4 is a flowchart illustrating steps for calculating a defect level for a rotating machine according to one embodiment of the present disclosure.
FIG. 5 is a flowchart illustrating steps for applying a weight on the basis of the defect level for the rotating machine according to one embodiment of the present disclosure.
FIG. 6 is a flowchart illustrating a method for comprehensively deriving a defect severity on the basis of diagnosis results for a rotating machine according to one embodiment of the present disclosure.

Mode for Disclosure

Hereinafter, one embodiment of the present disclosure will be described in detail with reference to the accompanying drawings. However, the present embodiment is not limited to the embodiments disclosed below and may be implemented in various forms, and only the present embodiment is provided to complete the disclosure of the present invention and to fully inform those skilled in the art of the scope of the invention. The shapes of elements in the drawings may be exaggeratedly expressed for more clear description, and elements indicated by the same reference numerals in the drawings mean the same elements.

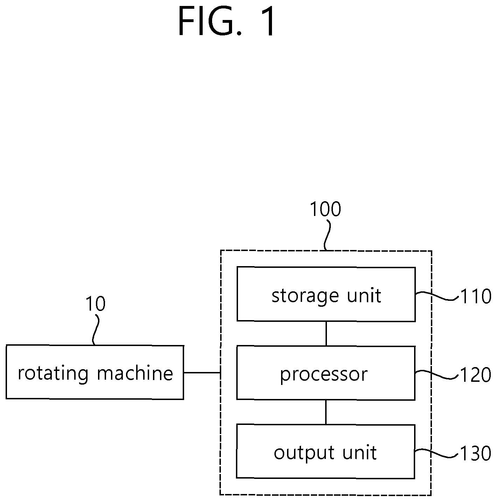

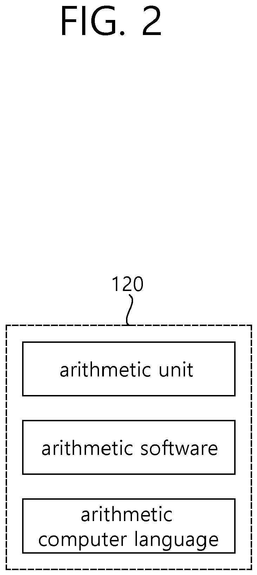

FIG. 1 is a configuration diagram illustrating a defect diagnosis system of a rotating machine according to one embodiment of the present disclosure. FIG. 2 is a configuration diagram illustrating an arithmetic processor of a defect diagnosis system according to one embodiment of the present disclosure.

Here, a rotating machine 10 may be various rotating devices such as a pump, a compressor, and a fan. However, this is for explaining the present disclosure, and the type of rotating machine 10 is not limited.

Meanwhile, a defect diagnosis system 100 may acquire data from the rotating machine 10, build the data, and use the built data to perform automatic prediction diagnosis when the defect diagnosis of the rotating machine 10 is needed. In addition, the defect diagnosis system 100 outputs the diagnosed defect value so that an inspector can intuitively determine whether or not the rotating machine 10 has an abnormality and determine the replacement and maintenance period.

First, a sensor for acquiring various information including operating information of the rotating machine 10 may be mounted on the rotating machine 10. In addition, the sensor can be interlocked with the defect diagnosis system 100 so that the acquired data can be provided to the defect diagnosis system 100. However, this is for explanation of the present disclosure, and it should be noted that data on the rotating machine 10 may be directly acquired by an operator and input to a predictive diagnosis system without being acquired by a sensor.

In addition, the defect diagnosis system 100 includes a storage unit 110 in which data provided from the rotating machine 10 is stored, an arithmetic processor 120 that performs prediction and diagnosis on the basis of the data acquired from the rotating machine 10, and an output unit 130 that displays defect information. Here, the arithmetic processor 120 may include an arithmetic unit provided in a computer, software for arithmetic, computer language for arithmetic, and the like, and the arithmetic processor 120 may perform processes to be performed below.

Meanwhile, hereinafter, a method for diagnosing a defect of a rotating machine according to various embodiments of the present disclosure will be described in detail. However, detailed descriptions of the above-described components will be omitted and the same reference numerals will be given for description.

For example, the defect diagnosis system 100 may monitor vibration of a facility and trends for operating variables related to the facility. The defect diagnosis system 100 can change a monitoring period according to abnormalities in the facility. The defect diagnosis system 100 may analyze the trend of change, and the defect diagnosis system 100 can predict the state of the facility through the analyzed trend of change. The defect diagnosis system 100 may set a monitoring target and a monitoring period. The defect diagnosis system 100 may monitor vibration trends for each facility point. The defect diagnosis system 100 can monitor operating variables at the same time.

For example, the defect diagnosis system 100 may diagnose the defect on the basis of narrowband diagnosis. That is, the defect diagnosis system 100 can monitor the facility by classifying the defect frequency band for each facility in detail. The defect diagnosis system 100 may predict the type of defect as well as the presence or absence of a defect. The defect diagnosis system 100 may derive the defect frequency band of each facility. The defect diagnosis system 100 may set an allowable range for each band of defect frequencies. For example, the defect diagnosis system 100 may set an alert within $2\sigma$ from a reference value and set a fault within $3\sigma$ from the reference value. The defect diagnosis system 100 may diagnose a defect frequency for each period. This narrowband diagnosis technique may be effective in defecting an early defect.

For example, the defect diagnosis system 100 may diagnose the defect on the basis of the diagnosis based on a rule. That is, the defect diagnosis system 100 may automatically diagnose the facility on the basis of defect characteristics and/or facility information. The defect diagnosis system 100 may implement the verified diagnosis rules as logic in the form of a decision tree. The defect diagnosis system 100 may automatically derive an expert-level diagnosis result when data is input. Since the diagnosis on the basis of the rule uses the verified diagnosis rule, reliability of the diagnosis results can increase, and the process and contents of diagnosis results can be traced.

For example, the defect diagnosis system 100 may diagnose the defect through comparison between facilities of the same type. That is, the defect diagnosis system 100 may group the facilities of the same type, and the defect diagnosis system 100 may diagnose the defect by mutually comparing the facilities of the same type. The defect diagnosis system 100 may derive a defect with a high frequency of an occurrence for each of the facilities of the same type. The defect diagnosis system 100 may group facilities of the same type having the same function into the facilities of the same type. The defect diagnosis system 100 derives the defect with a high frequency of an occurrence for each of the facilities of the same type, so that vulnerable parts can be secured in advance and in the event of a sudden breakdown of the facility, it can be prepared in an emergency. The defect diagnosis system 100 may optimize the maintenance cycle by reflecting characteristics of the facilities of the same type.

For example, the defect diagnosis system 100 may diagnose the defect through machine learning. That is, the defect diagnosis system 100 may diagnose the defect through artificial intelligence utilizing a large amount of data. The defect diagnosis system 100 may extract features from various data, and the defect diagnosis system 100 may implement a classification model through learning. For example, the defect diagnosis system 100 may determine a classification model based on normal, abnormal, and defect types. A small number of diagnosis models on the basis of the machine learning may be applied to various facilities.

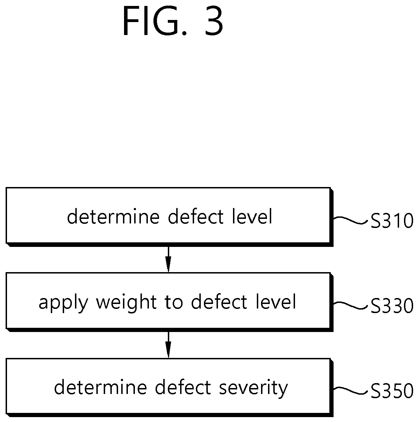

FIG. 3 is a flowchart illustrating a method for comprehensively diagnosing the defect in the rotating machine according to one embodiment of the present disclosure.

Referring to FIG. 3, in Step S310, the defect diagnosis system 100 may determine a defect level on the basis of data obtained by diagnosing the state of the rotating machine. In Step S330, the defect diagnosis system 100 may apply a weight to the defect level on the basis of at least one of information related to a defect in the state history data of the rotating machine or whether an alarm related to the operation information of the rotating machine has occurred. In Step S350, the defect diagnosis system 100 may determine a defect severity of the rotating machine on the basis of the defect level to which the weight is applied.

For example, the state history data of the rotating machine may include maintenance history of the rotating machine and information about the facilities of the same type related to the rotating machine. The defect in the state history data of a rotating machine may be a defect with the highest frequency in the facilities of the same type.

For example, an alarm may occur on the basis of the monitoring item related to operation information of the rotating machine exceeding a preset reference value. The operation information of the rotating machine may include at least one of a flow rate of a pump related to the rotating machine, front and rear end pressures related to the rotating machine, and a fluid temperature related to the rotating machine.

For example, on the basis of the defect with the highest frequency in the facilities of the same type related to a rotating machine matching the defect state of the rotating machine related to the defect level, the defect diagnosis system 100 may add the weight to the defect level. Alternatively, on the basis of the occurrence of an alarm related to the operation information of the rotating machine, the defect diagnosis system 100 may add the weight to the defect level. For example, on the basis of a discrepancy between the defect with the highest frequency in the facilities of the same type related to the rotating machine and the defect state of the rotating machine related to the defect level, the defect diagnosis system 100 may determine whether the alarm related to the operation information of the rotating machine occurs.

For example, in the defect diagnosis system 100, the data for diagnosing the state of the rotating machine may include at least one of a feature vector related to the vibration signal of the rotating machine, the frequency linked to the defect of the rotating machine, and a total vibration value of the rotating machine. Here, machine learning may be performed on the basis of the feature vector related to the vibration signal of the rotating machine. For example, the defect diagnosis system 100 may determine the first defect value as 0 on the basis of the absence of defects in the rotating machine. At this time, the defect diagnosis system 100 may determine the defect level as 0 on the basis of that the first defect value is 0. Alternatively, on the basis of the existence of defects in the rotating machine, the defect diagnosis system 100 may determine the first defect value on the basis of all samples related to the rotating machine and defect samples related to the rotating machine.

For example, the defect diagnosis system 100 may determine the second defect value as the first preset value on the basis of the frequency linked to the defect of the rotating machine being within a preset range. Alternatively, the defect diagnosis system 100 may determine the second defect value as the first defect value on the basis of the frequency linked to the defect of the rotating machine being outside a preset range. In this case, the defect diagnosis system 100 may determine the defect level as the first defect value.

For example, the defect diagnosis system 100 may determine a third defect value as the second defect value on the basis of the total vibration value of the rotating machine being smaller than the first threshold value. In this case, the defect diagnosis system 100 may determine the defect level as the second defect value. Alternatively, the defect diagnosis system 100 may determine the third defect value as a preset second value on the basis of the total vibration value of the rotating machine being greater than the first threshold value. In this case, the defect diagnosis system 100 may determine the defect level as a preset second value. Alternatively, the defect diagnosis system 100 may determine the third defect value as a preset third value on the basis of the total vibration value of the rotating machine being greater than the second threshold value. In this case, the defect diagnosis system 100 may determine the defect level as a preset third value.

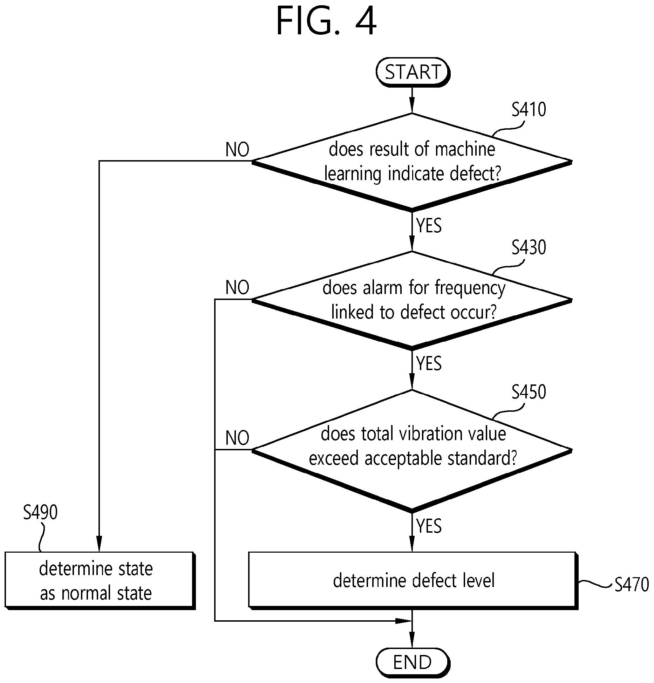

FIG. 4 is a flowchart illustrating steps for calculating the defect level for the rotating machine according to one embodiment of the present disclosure.

First, the defect diagnosis system 100 may receive data obtained by diagnosing the state of the rotating machine and perform machine learning on the basis of the data obtained by diagnosing the state of the rotating machine.

Then, referring to FIG. 4, in Step S410, the defect diagnosis system 100 may determine whether a defect has occurred in the rotating machine on the basis of the result of the machine learning. For example, when a defect occurs in a rotating machine, the defect diagnosis system 100 may calculate a proportion of a sample indicating a defect. For example, the proportion of samples indicating defects may be a ratio of samples with defects related to the rotating machine with respect to all samples related to the rotating machine. The defect diagnosis system 100 may determine the first defect value on the basis of the proportion of samples indicating defects. Alternatively, for example, when no defect occurs in the rotating machine, the defect diagnosis system 100 may determine the first defect value as 0.

In Step S430, the defect diagnosis system 100 may determine whether an alarm occurs for a frequency linked to the defect of the rotating machine. When the first defect value is determined as a value other than 0 in Step S410, the defect diagnosis system 100 may determine whether an alarm occurs for a frequency linked to the defect of the rotating machine. For example, the alarm for the frequency linked to a defect of the rotating machine may occur when the frequency linked to a defect of the rotating machine is within a preset range. For example, the alarm for the frequency linked to the defect of the rotating machine may not occur when the frequency linked to the defect of the rotating machine is outside the preset range. When the alarm for the frequency linked to the defect of the rotating machine occurs, the defect diagnosis system 100 may determine the second defect value as a preset first value. Alternatively, when the alarm for the frequency linked to the defect of the rotating machine does not occur, the defect diagnosis system 100 may determine the second defect value as the first defect value.

In Step S450, the defect diagnosis system 100 may determine whether or not the total vibration value of the rotating machine exceeds an acceptable standard. When the alarm for the frequency linked to the defect of the rotating machine occurs in Step S430, the defect diagnosis system 100 may determine whether the total vibration value of the rotating machine exceeds an acceptable standard. For example, the defect diagnosis system 100 may determine the third defect value as the second defect value on the basis of the entire vibration value of the rotating machine being smaller than the first threshold value. Alternatively, the defect diagnosis system 100 may determine the third defect value as a preset second value on the basis of the entire vibration value of the rotating machine being greater than the first threshold value. Alternatively, the defect diagnosis system 100 may determine the third defect value as a preset third value on the basis of the entire vibration value of the rotating machine being greater than the second threshold value. For example, the second threshold value may be greater than the first threshold value.

In Step S470, the defect diagnosis system 100 may determine the defect level for the rotating machine. For example, when the alarm for the frequency linked to the defect of the rotating machine does not occur in Step S430, the defect diagnosis system 100 may determine the second defect value as the first defect value and determine the defect level as the first defect value. For example, in Step S450, when the total vibration value of the rotating machine is smaller than the first threshold value, the defect diagnosis system 100 may determine the third defect value as the second defect value, and the defect level as the second defect value. For example, in Step S450, when the total vibration value of the rotating machine is greater than the first threshold value, the defect diagnosis system 100 may determine the third defect value as the preset first value and the defect level to the third defect value. For example, when the total vibration value of the rotating machine is greater than the second threshold value in Step S450, the defect diagnosis system 100 may determine the third defect value as the preset second value and the defect level as the third defect value.

In Step S490, the defect diagnosis system 100 may determine the rotating machine to be in a normal state. For example, in Step S410, when it is diagnosed that no defect has occurred on the rotating machine on the basis of the machine learning, the defect diagnosis system 100 may determine the rotating machine to be in a normal state. For example, when the rotating machine is in a normal state, the defect level may be 0.

For example, when the defect diagnosis system 100 determines that the rotating machine is in a normal state, Steps S430 and S450 may be omitted. For example, when the alarm for the frequency linked to the defect in the rotating machine does not occur, Step S450 may be omitted.

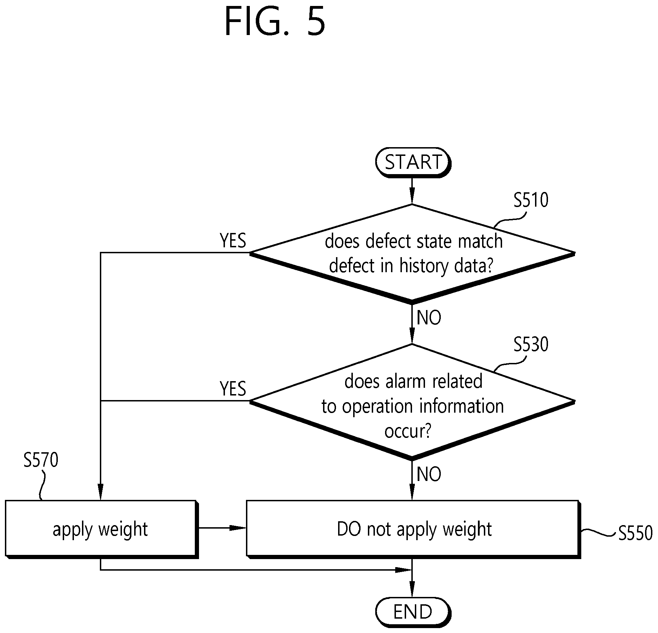

FIG. 5 is a flowchart illustrating steps for applying the weight on the basis of the defect level for the rotating machine according to one embodiment of the present disclosure.

Referring to FIG. 5, in Step S510, the defect diagnosis system 100 may determine whether a defect in the state history data of the rotating machine matches a defect state of the rotating machine related to the defect level. For example, the defect diagnosis system 100 may determine whether the defect with the highest frequency in the facilities of the same type related to the rotating machine matches the defect state of the rotating machine related to the defect level. Here, the state history data of the rotating machine may include information related to a maintenance history of the rotating machine and the facilities of the same type.

In Step S530, the defect diagnosis system 100 may determine whether the alarm related to the operation information occurs. For example, when the defect in the state history data of the rotating machine and the defect state of the rotating machine related to the defect level do not match, the defect diagnosis system 100 may determine whether the alarm related to the operation information has occurred. For example, when the defect in state history data of the rotating machine and the defect state of a rotating machine related to the defect level do not match, the defect diagnosis system 100 may determine whether a monitoring item related to the operation information of the rotating machine exceeds the preset reference value. That is, the defect diagnosis system 100 may generate the alarm on the basis of when the monitoring item related to the operation information of the rotating machine exceeding the preset reference value. Here, the operation information of the rotating machine may include at least one of a flow rate of the pump related to the rotating machine, the front and rear pressures related to the rotating machine, and the fluid temperature related to the rotating machine.

In Step S550, the defect diagnosis system 100 may not apply the weight to the defect level. For example, when the defect with the highest frequency in the facilities of the same type related to a rotating machine and the defect state of the rotating machine related to the defect level match, the defect diagnosis system 100 may apply the weight to the defect level. For example, when the alarm related to the operation information of the rotating machine occurs, the defect diagnosis system 100 may apply the weight to the defect level.

In Step S570, the defect diagnosis system 100 may apply the weight to the defect level. For example, when the defect with the highest frequency in the facilities of the same type related to the rotating machine and the defect state of the rotating machine related to the defect level do not match, the defect diagnosis system 100 may not apply the weight to the defect level. For example, when an alarm related to operation information of a rotating machine does not occur, the defect diagnosis system 100 may apply a weight to the defect level. For example, when the defect with the highest frequency in the facilities of the same type related to the rotating machine and the defect state of the rotating machine related to the defect level do not match and the alarm related to the operation information of the rotating machine does not occur, the defect diagnosis system 100 may apply the weight to the defect level.

For example, when the defect with the highest frequency in the facilities of the same type related to the rotating machine and the defect state of the rotating machine related to the defect level match, Steps S530 and S550 may be omitted.

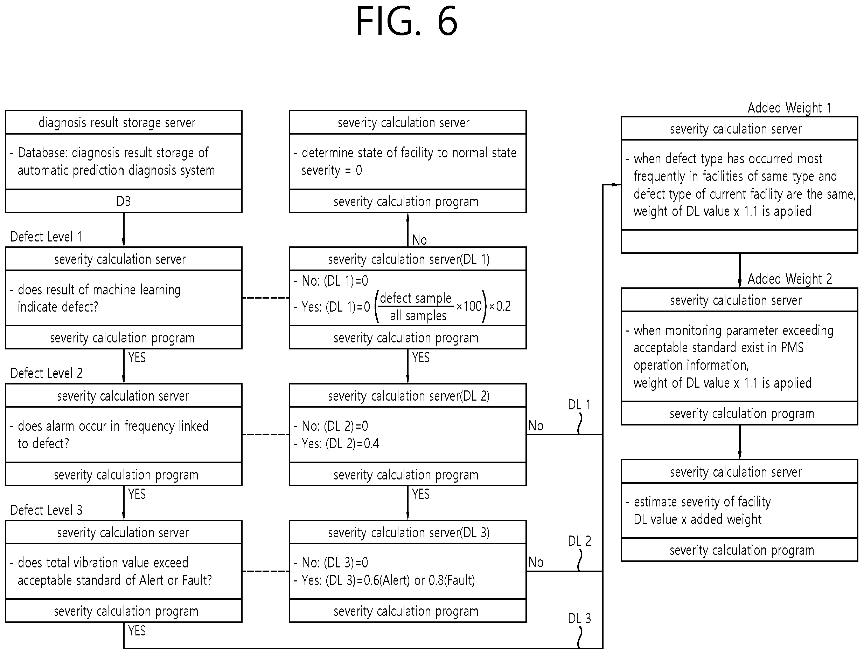

FIG. 6 is a flowchart illustrating a method for comprehensively deriving the defect severity on the basis of diagnosis results for the rotating machine according to one embodiment of the present disclosure.

Referring to FIG. 6, a severity calculation program may be a program that automatically quantifies the state of the facility from a minor defect to an excessive defect (for example, from the defect level (hereinafter referred to as DL) 1 to DL 3). For example, the defect diagnosis system can include the severity calculation program.

In order to comprehensively consider and quantify the state of the facility in various fields, for the defect diagnosis system, the diagnosis results through each diagnosis technique are collectively inquired, and the diagnosis results can be input to the defect diagnosis system.

DL 1 may be a step for evaluating a minor defect or asymptomatic with respect to facility (for example, a rotating machine). For example, the defect diagnosis system can query machine learning results for the facility or perform the machine learning on the basis of data related to the facility. Subsequently, when the machine learning result indicates the defect, the defect diagnosis system may determine a first DL value by calculating the proportion of samples indicating a defect. For example, the proportion of samples indicating the defects may be a ratio of samples with defects related to the rotating machine to all samples related to the rotating machine. For example, the proportion of the samples indicating the defect may be Equation 1 below.

[Equation 1]

$$(\text{Defect Samples}/\text{All Samples} \times 100) \times 0.2$$

For example, when the machine learning result does not indicate the defect, the defect diagnosis system may determine the DL value as 0 and the state of the facility as normal.

For example, since the vibration signals have unique characteristics depending on the state of facility, the defect diagnosis system can calculate the feature vectors that can express each characteristic well through machine learning diagnosis techniques. The defect diagnosis system may classify features that represent a minimized distance between features of the same state and a maximized distance between features of different states, and may form an area according to the state of defect. The defect diagnosis system may learn characteristics by the state (for example, by (normal, defect type)) of numerous previous data, and may classify areas by the state. In this case, when new data is input, the defect diagnosis system may predict the state of the facility as the area where the data is input. Therefore, since the subjective human intervention is minimized, it is possible to objectively determine the defect without prejudice.

DL 2 may be a step for evaluating the severity of a defect. The defect diagnosis system may inquire whether an alarm has occurred in the defect linked frequency. For example, whether an alarm occurs at the defect inked frequency may be determined on the basis of the frequency linked to the defect of the rotating machine being within a preset range or outside a preset range. That is, for example, when the frequency linked to the defect in the rotating machine is within the preset range, an alarm may occur. Alternatively, when the frequency linked to the defect of the rotating machine is outside the preset range, an alarm may not occur. In this case, when the alarm for the defect linked frequency occurs, the defect diagnosis system may determine the second DL value as 0.4. Here, 0.4 may be the preset value, and may be set to other values according to various embodiments of the present disclosure. Alternatively, when the alarm for the defect linked frequency does not occur, the defect diagnosis system may determine the first DL value as the final DL value, that is, the second DL value.

For example, a narrowband frequency diagnosis technique may be a method of monitoring and evaluating the frequency of a region of interest by subdividing the frequency region, unlike evaluating the entire frequency region with one energy value. In other words, since various defects occurring in facility cause amplitude changes in a specific frequency region, the defect diagnosis system classifies the frequency region of interest as a parameter, sets a permissible range, and monitors the facility. Therefore, the defect diagnosis system may obtain defect information for each frequency region of interest and identify the cause of the defect.

DL 3 may be a step to evaluate the facility as a warning or dangerous state. For example, when the total vibration value exceeds an alert acceptable standard (for example, a first threshold value), the defect diagnosis system may determine the third DL value as 0.6. Here, 0.6 may be a preset value, and may be set to other values according to various embodiments of the present disclosure. For example, when the total vibration value exceeds the fault acceptable standard (for example, the second threshold value), the defect diagnosis system may determine the third DL value as 0.8. For example, when the total vibration value does not exceed the acceptable standard (for example, the first threshold value), the defect diagnosis system may determine the second DL value as the final DL value, that is, the third DL value.

For example, the diagnosis technique through the total vibration value may be a method of evaluating the total vibration value output from the facility based on the standard of limit value or allowable value according to international standards or facility manufacturer's recommendations. The defect diagnosis system may classify facilities by type, capacity, support structure, or the like, and can apply evaluation criteria appropriate to the facility in question. Since management standards such as international standard vibration standards (ISO API, or the like) are constantly being revised to improve the legitimacy of standards, the defect diagnosis system may evaluate the defect on the basis of the revised management standards. Therefore, when diagnosing the defect for a state in which an outlier in the acceptable standard occurs, the defect diagnosis system may diagnose the defect more accurately.

The first added weight (added weight 1) may be a step for calculating an added weight to the DL value. For example, the defect diagnosis system may query and/or determine the state history data of the facility by linking the maintenance history of the facility and the facilities of the same type. In this case, when the defect that has occurred most frequently matches the diagnosis result of the current facility, the defect diagnosis system may add the weight to the DL value. For example, when the defect that has occurred most frequently and the current facility state match, the defect diagnosis system may apply the weight by multiplying the DL value by 1.1. For example, when the defect that has occurred most frequently and the current facility state do not match, the defect diagnosis system may not apply the weight to the DL value.

For example, a technique for diagnosing by comparing facilities of the same type may be a technique using the maintenance history and the state history data of the facility linked to facilities of the same type. That is, the defect diagnosis system may add an additional severity when the defect that has occurred most frequently in the facilities of the same type matches the current state of the facility. For example, the defect diagnosis system may reclassify the facilities of the same type diagnosed as the defect that has occurred most frequently, and at least one of narrowband frequency information or machine learning information of the facilities of the same type may be used for predicting and diagnosing the defect of the facility.

Therefore, since the defect diagnosis system may intensively monitor the characteristic values of the defects that have occurred the most, it can minimize the objects to be monitored.

The second added weight (added weight 2) may be a step for calculating an added weight to the DL value. For example, the second added weight may be considered when the first added weight is not applied. That is, the defect diagnosis system may consider the second added weight when the defect that has occurred most frequently in the facilities of the same type and the current state of facility does not match. For example, when the monitoring item related to power management system (PMS) operation information exceeds the acceptable standard, the defect diagnosis system may raise the alarm or inquire when an alarm has occurred. The defect diagnosis system may apply the weight by multiplying DL value by 1.1 when the alarm occurs. For example, when the monitoring item related to power management system (PMS) driving information does not exceed the acceptable standard, the defect diagnosis system may not apply the weight to the DL value.

For example, the defect diagnosis technique using operation information may utilize operation information affecting facility. For example, the operation information that affects the facility may include the pump flow rate related to the facility, the front and rear end pressures related to the facility, and the fluid temperature related to the facility. The reliability of diagnosis results can be improved through correlation analysis that links vibration characteristics and driving information.

The defect diagnosis system may evaluate the finally calculated DL value as the defect severity that quantitatively indicates the state of the facility.

As described above, according to the method and system for diagnosing the defect in the rotating machine according to the present disclosure, it is possible to quantitatively evaluate the minute state change of the facility, accurately confirm the progress of the defect of the facility by utilizing the evaluation result value (severity), and more accurately determine the maintenance period and lifespan of the state of the facility.

[Detailed Description of Main Elements]

    10: rotating machine
    100: defect diagnosis system of rotating machine
    110: storage unit
    120: arithmetic processor
    130: output unit

**Claims**

1. A method of diagnosing a defect in a rotating machine, the method comprising:

    determining a defect level on the basis of data obtained by diagnosing a state of the rotating machine, the data, obtained by diagnosing the state of the rotating machine, including at least one from among a feature vector related to a vibration signal of the rotating machine, a frequency linked to the defect in the rotating machine, and a total vibration value of the rotating machine;
    applying a weight to the defect level on the basis of information related to a defect in state history data of the rotating machine and/or whether an alarm related to operation information about the rotating machine has occurred; and
    determining a defect severity of the rotating machine on the basis of the defect level to which the weight is applied.

2. The method of claim 1, wherein the state history data of the rotating machine includes a maintenance history of the rotating machine and information related to facilities of the same type, and
the defect in the state history data of the rotating machine is a defect with the highest frequency in the facilities of the same type.

3. The method of claim 1, wherein the alarm occurs on the basis of a monitoring item related to operation information of the rotating machine exceeding a preset reference value.

4. The method of claim 1, wherein the operation information of the rotating machine includes at least one of a flow rate of a pump related to the rotating machine, front and rear end pressures related to the rotating machine, or a fluid temperature related to the rotating machine.

5. The method of claim 2, wherein the applying of the weight to the defect level includes adding the weight to the defect level on the basis of matching between the defect with the highest frequency in the facilities of the same type related to the rotating machine and a defect state of the rotating machine related to the defect level.

6. The method of claim 1, wherein the applying of the weight to the defect level includes adding the weight to the defect level on the basis of an occurrence of the alarm related to operation information of the rotating machine.

7. The method of claim 1, wherein it is determined whether the alarm related to the operation information of the rotating machine occurs on the basis of a discrepancy between the defect with the highest frequency in the facilities of the same type related to the rotating machine and the defect state of the rotating machine related to the defect level.

8. The method of claim 1, wherein the determining of the defect severity includes

    diagnosing a first defect value for the rotating machine through machine learning on the basis of the feature vector related to a vibration signal of the rotating machine,
    diagnosing a second defect value on the basis of the frequency linked to the defect of the rotating machine and the first defect value,
    diagnosing a third defect value on the basis of the total vibration value of the rotating machine and the second defect value, and
    determining the defect level of the rotating machine on the basis of at least one of the first defect value, the second defect value, and the third defect value.

9. The method of claim 8, wherein the diagnosing of the first defect value includes determining whether the rotating machine has a defect through the machine learning.

10. The method of claim 9, wherein on the basis of the existence of the defect in the rotating machine, the first defect value is determined on the basis of all samples related to the rotating machine and defect samples related to the rotating machine, and
on the basis of the frequency linked to the defect of the rotating machine being within a preset range, the second defect value is determined as a preset first value.

11. The method of claim 10, wherein on the basis of the total vibration value of the rotating machine being smaller than a first threshold value, the third defect value is determined as the second defect value, and the defect level is determined as the second defect value.

12. The method of claim 10, wherein on the basis of the total vibration value of the rotating machine being greater than a first threshold value, the third defect value is determined as a preset second value, and the defect level is determined as the preset second value.

13. The method of claim 10, wherein on the basis of the total vibration value of the rotating machine being greater than a second threshold value, the third defect value is determined as a preset third value, and the defect level is determined as the preset third value.

14. A system of diagnosing a defect in a rotating machine, the system comprising:

   determining a defect level on the basis of data obtained by diagnosing a state of the rotating machine, the data, obtained by diagnosing the state of the rotating machine, including at least one from among a feature vector related to a vibration signal of the rotating machine, a frequency linked to the defect in the rotating machine, and a total vibration value of the rotating machine;
   applying a weight to the defect level on the basis of information related to a defect in state history data of the rotating machine and/or whether an alarm related to operation information about the rotating machine has occurred; and
   determining a defect severity of the rotating machine on the basis of the defect level to which the weight is applied.

15. An arithmetic processor of a system of diagnosing a defect in a rotating machine, the arithmetic processor comprising:

   determining a defect level on the basis of data obtained by diagnosing a state of the rotating machine, the data, obtained by diagnosing the state of the rotating machine, including at least one from among a feature vector related to a vibration signal of the rotating machine, a frequency linked to the defect in the rotating machine, and a total vibration value of the rotating machine;
   applying a weight to the defect level on the basis of information related to a defect in state history data of the rotating machine and/or whether an alarm related to operation information about the rotating machine has occurred; and determining a defect severity of the rotating machine on the basis of the defect level to which the weight is applied.

# FIG. 1

# FIG. 2

120

```
┌ ─ ─ ─ ─ ─ ─ ─ ─ ─ ─ ─ ─ ─ ─ ─ ┐
│  ┌─────────────────────────┐  │
│  │     arithmetic unit     │  │
│  └─────────────────────────┘  │
│                               │
│  ┌─────────────────────────┐  │
│  │   arithmetic software   │  │
│  └─────────────────────────┘  │
│                               │
│  ┌─────────────────────────┐  │
│  │        arithmetic       │  │
│  │    computer language    │  │
│  └─────────────────────────┘  │
└ ─ ─ ─ ─ ─ ─ ─ ─ ─ ─ ─ ─ ─ ─ ─ ┘
```

# FIG. 3

```
┌────────────────────────────┐
│   determine defect level   │ ～S310
└────────────────────────────┘
              │
              ▼
┌────────────────────────────┐
│  apply weight to defect level  │ ～S330
└────────────────────────────┘
              │
              ▼
┌────────────────────────────┐
│  determine defect severity │ ～S350
└────────────────────────────┘
```

# FIG. 4

```
                    ( START )
                         │
                         ▼
            NO      ╱ does result of machine ╲      S410
        ◄──────────   learning indicate defect?
        │           ╲                        ╱
        │                      │ YES
        │                      ▼
        │       NO      ╱ does alarm for frequency ╲    S430
        │   ◄──────────   linked to defect occur?
        │   │           ╲                          ╱
        │   │                    │ YES
        │   │                    ▼
        │   │    NO      ╱ does total vibration value ╲   S450
        │   │  ◄──────────  exceed acceptable standard?
        │   │  │         ╲                           ╱
        │   │  │                   │ YES
        ▼   │  │                   ▼
  ┌─────────────┐          ┌──────────────────────┐
  │ determine   │          │  determine defect level│  S470
  │ state as    │          └──────────────────────┘
  │ normal state│                    │
  └─────────────┘                    │
   S490         │                    ▼
               └───────────────►  ( END )
```

determine state
as normal state

S490

determine defect level  S470

EP 4 273 520 A1

# FIG. 5

START

does defect state match
defect in history data? — S510

YES

NO

does alarm related
to operation information
occur? — S530

YES

NO

apply weight — S570

DO not apply weight — S550

END

# FIG. 6

**diagnosis result storage server**
- Database: diagnosis result storage of automatic prediction diagnosis system
- DB

Defect Level 1

**severity calculation server**
- does result of machine learning indicate defect?
- severity calculation program

Defect Level 2

**severity calculation server**
- does alarm occur in frequency linked to defect?
- severity calculation program

Defect Level 3

**severity calculation server**
- does total vibration value exceed acceptable standard of Alert or Fault?
- severity calculation program

YES

**severity calculation server**
- determine state of facility to normal state severity = 0
- severity calculation program

No

**severity calculation server(DL 1)**
- No: (DL 1)=0
- Yes: (DL 1)=0 $\left(\dfrac{\text{defect sample}}{\text{all samples}} \times 100\right) \times 0.2$
- severity calculation program

YES

**severity calculation server(DL 2)**
- No: (DL 2)=0
- Yes: (DL 2)=0.4
- severity calculation program

YES

**severity calculation server(DL 3)**
- No: (DL 3)=0
- Yes: (DL 3)=0.6(Alert) or 0.8(Fault)
- severity calculation program

No → DL 1
No → DL 2
DL 3

Added Weight 1

**severity calculation server**
- when defect type has occurred most frequently in facilities of same type and defect type of current facility are the same, weight of DL value x 1.1 is applied

Added Weight 2

**severity calculation server**
- when monitoring parameter exceeding acceptable standard exist in PMS operation information, weight of DL value x 1.1 is applied
- severity calculation program

**severity calculation server**
- estimate severity of facility DL value x added weight
- severity calculation program

<div align="center">**INTERNATIONAL SEARCH REPORT**</div>

| International application No. |
| --- |
| **PCT/KR2021/020137** |

**A.   CLASSIFICATION OF SUBJECT MATTER**

**G01H 1/14**(2006.01)i; **G01M 99/00**(2011.01)i; **G06N 20/00**(2019.01)i

According to International Patent Classification (IPC) or to both national classification and IPC

**B.     FIELDS SEARCHED**

Minimum documentation searched (classification system followed by classification symbols)

G01H 1/14(2006.01); G01B 17/04(2006.01); G01H 1/00(2006.01); G01M 7/02(2006.01); G01N 33/28(2006.01); G06Q 10/06(2012.01); G06Q 50/10(2012.01); G21D 3/04(2006.01); H01F 27/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 회전기계(rotating machine), 결함(defect), 알람(alarm), 가중치(weight), 심각도 (severity)

**C.     DOCUMENTS CONSIDERED TO BE RELEVANT**

| Category* | Citation of document, with indication, where appropriate, of the relevant passages | Relevant to claim No. |
| --- | --- | --- |
| Y | KR 10-2015-0058928 A (LEE, Sun Hwi) 29 May 2015 (2015-05-29)<br>See paragraphs [0013]-[0014], [0017]-[0019], [0036] and [0066]-[0096]; claim 3; and figure 1. | 1-6,14-15 |
| A | | 7-13 |
| Y | KR 10-2013-0129679 A (KOREA ELECTRICAL SAFETY CORPORATION) 29 November 2013 (2013-11-29)<br>See paragraphs [0023]-[0032]; and figure 1. | 1-6,14-15 |
| Y | KR 10-2019-0115953 A (KOREA ELECTRIC POWER CORPORATION) 14 October 2019 (2019-10-14)<br>See paragraphs [0019]-[0021], [0024]-[0028], [0031] and [0056]; claim 1; and figure 1. | 2-6 |
| A | KR 10-2017-0038348 A (KOREA ELECTRIC POWER CORPORATION) 07 April 2017 (2017-04-07)<br>See paragraphs [0025]-[0031]; and figure 1. | 1-15 |

☑ Further documents are listed in the continuation of Box C.       ☑ See patent family annex.

| | | |
| --- | --- | --- |
| * | Special categories of cited documents: | |
| "A" | document defining the general state of the art which is not considered to be of particular relevance | "T"   later document published after the international filing date or priority date and not in conflict with the application but cited to understand the principle or theory underlying the invention |
| "D" | document cited by the applicant in the international application | "X"   document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"   document member of the same patent family |

| Date of the actual completion of the international search | Date of mailing of the international search report |
| --- | --- |
| **08 April 2022** | **08 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
|---|
| **PCT/KR2021/020137** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2028845 B1 (KOREA HYDRO & NUCLEAR POWER CO., LTD.) 04 October 2019 (2019-10-04)<br>        See paragraphs [0024] and [0027]-[0028]; and figure 3. | 1-15 |

Form PCT/ISA/210 (second sheet) (July 2019)

**INTERNATIONAL SEARCH REPORT**
Information on patent family members

International application No.

**PCT/KR2021/020137**

| Patent document cited in search report | | | Publication date (day/month/year) | Patent family member(s) | | | Publication date (day/month/year) |
|---|---|---|---|---|---|---|---|
| KR | 10-2015-0058928 | A | 29 May 2015 | KR | 10-1567756 | B1 | 11 November 2015 |
| KR | 10-2013-0129679 | A | 29 November 2013 | KR | 10-1316693 | B1 | 08 October 2013 |
| | | | | KR | 10-1360979 | B1 | 12 February 2014 |
| KR | 10-2019-0115953 | A | 14 October 2019 | None | | | |
| KR | 10-2017-0038348 | A | 07 April 2017 | None | | | |
| KR | 10-2028845 | B1 | 04 October 2019 | None | | | |

Form PCT/ISA/210 (patent family annex) (July 2019)